# EUROPEAN PATENT SPECIFICATION

(11) **EP 1 530 903 B1**
(45) Date of publication and mention of the grant of the patent: **18.07.2007**
(21) Application number: 03425735.2
(22) Date of filing: 14.11.2003
(51) Int. Cl.: A21B 5/00, A21B 1/42

(54) **Machine for cooking and/or pre-cooking thin unleavened loaves**
Maschine zum Kochen und/oder Vorkochen von dünnen, treibmittelfreien Laiben
Appareil de cuisson et/ou précuisson de miches minces, sans un agent levant

(43) Date of publication of application: 18.05.2005
(73) Proprietor: I.G.F. Italstampi di Fabbri Giancarlo & C. S.n.c., 47826 Villa Verucchio (Rimini) (IT)
(72) Inventor: Fabbri, Giancarlo, 47826 Villa Verucchio (Rimini) (IT); Fabbri, Luciano, 61015 Novafeltria (Pesaro Urbino) (IT)
(74) Representative: Lanzoni, Luciano

(56) References cited:
- FR-A- 2 658 388
- US-A- 1 869 541
- US-A- 3 215 062
- US-A- 3 718 487
- US-A- 4 751 876
- US-A- 5 441 755
- US-A- 5 481 963

## Description

The present invention relates to a machine for cooking and/or for pre-cooking thin unleavened loaves, in particular either bare or stuffed thin unleavened loaves and, more in particular, for cooking and/or pre-cooking the so-called "piade" (or "piadine") and/or the so-called "cassoni".

Many culinary traditions entail the use of thin unleavened loaves of various types. Said unleavened loaves are constituted by a thin layer of edible material (generally round shaped) which, obtained by flattening or crushing small loaves obtained from a homogeneous dough made with various ingredients, is subsequently cooked by placing it on a very hot iron plate.

In a geographical area of Italy called Romagna, widespread use is made of a particular, very thin, type of said unleavened loaves, known as "piada" (or "piadina"), instead of bread. The "piada" is traditionally hand produced by homemakers, who obtain it from a dough made by mixing wheat flour with water and salt. To the dough are generally added determined quantities of oil (generally olive oil) and/or of lard (generally pork lard). The dough is worked and divided into loaves that are flattened until forming the "piade". The "piada" is then cooked, also manually, on the iron plate, rapidly overturning it several times with the aid of a knife in order to cook both faces uniformly.

Thin unleavened loaves may also be prepared as stuffed loaves. The stuffing edible material is distributed on one half of the surface of the flattened loaf. The loaf is subsequently folded by placing the half which is not covered by the stuffing edible material over the other half, so as to close the stuffing edible material in between the two halves of the loaf. The stuffing operation is sometimes carried out when the loaf is raw and so soft that, once folded, it may be sealed by making its two halves adhere along the edges.

In the above mentioned geographical area of Italy, called Romagna, once a raw "piada" has been prepared, the homemaker may decide to stuff it, also manually, in the same way as the one described above (in particular with: cheese; vegetables and/or greens; a mixture of pork meat with cheese and a tomato sauce; and similar). By stuffing, folding and sealing raw "piade", raw so-called "cassoni" are obtained. These raw "cassoni" are generally half-moon shaped, their edges having a rounded part, which corresponds with the sealed edges of the raw "piada", and a straight part, which corresponds with the area interested by the folding of the raw "piada". The so obtained "cassone" has a thickness which is generally greater in the area of folding than in correspondence with the sealed edges.

A raw "cassone" is then cooked, also manually, on the iron plate, rapidly overturning it several times with the aid of a knife in order to cook both faces uniformly, and making it rest at times in a vertical position, with the thick folding area in direct contact with the iron plate, in order to cook it too. The cooking operation is generally longer for a "cassone" than for a "piada", due to the need to cook both the loaf and the stuffing edible material contained in it, as well as due to the greater thickness of the "cassone" itself with respect to that of a bare "piada".

The quality of the final product depends not only on the quality of the ingredients and on the way the dough was worked, but also to a considerable extent on the cooking process, whose optimization derives from the homemaker's own experience.

For many years, in Romagna, craftsmen's shops have produced loose cooked "piade" and/or "cassoni", which are sold directly in retail fashion for direct consumption at the counter. Recently, many such shops have reached industrial or nearly industrial dimensions and produce pre-cooked "piade" and/or "cassoni" in packages, which are then sold in supermarkets or stores. Such pre-cooked "piade" and/or "cassoni" require only rapid heating to be consumed by the final user. This industrial method of production and distribution has brought about a widespread consumption of the "piada" throughout Italy's territory and is contributing to its fame and widespread consumption abroad as well.

In the industrial production of "piada", the process of forming and working the dough, the production of the loaves and their lamination to form the raw "piade" are usually automated using corresponding machinery.

Also the operations of stuffing and folding the "piade" and of sealing their edges to obtain raw "cassoni" may be usually automated by using corresponding machinery.

The operations of packaging the cooked "piade" and/or "cassoni" into packets for shipment are obviously automated as well.

To assure that the final product has a quality level equivalent to that of the traditional "piada" and/or "cassone" obtained at home by an expert homemaker, in many firms the "piada" and/or "cassone" is, instead, still cooked by hand, in the traditional manner, on gas- or electrically heated iron or steel plates. To reach a productivity level of about 10,000 pre-cooked "piade" every 8 hours (average productivity of an average size workshop), therefore, the simultaneous work of many people is necessary.

Automatic machines are known for cooking thin unleavened loaves, in which a cooking surface comprises two cooking plates positioned consecutively to each other. Each cooking plate can be rotated from a horizontal receiving position, in which the cooking plate can receive a loaf to be cooked, to an overturned transfer position, in which the cooking plate considered transfers the overturned loaf either on the cooking plate immediately following it or on a removal station for removing the cooked or pre-cooked loaves. These machines allow the cooking or pre-cooking of the loaves on both sides, and in a sense replicate the gesture of the homemaker when she rapidly overturns the loaf or "piada" on the hot iron plate with the aid of a knife. Anyway they do not achieve this aim fully. The applicant has developed an improvement of this type of machines, specifically with the aim of replicating, as much as possible, the behavior of the homemakers when they perform the manual operations necessary for cooking high quality "piade". Among other things, the Applicant's improved machine provides for the use of more than two cooking plates. In particular, to have the "piada" cooked at least twice on both sides, a succession of at least four cooking plates is provided, wherein the cooking plates follow each other along a direction of flow of the loaves from a loading station, for loading the loaves to be cooked on the first cooking plate, to the removal station. The cooking plates are rotatable about an axis substantially corresponding with their side transversal to the direction of flow. This machine developed by the Applicant has been also made the object of a previous European Patent Application (European Patent Application n. 02425341.1, filed on May, 29th, 2002), which covers, among other things, some arrangements for improving the speed of rotation of the cooking plates, for optimizing the cooking process and for improving the loading of the loaves on the first cooking surface.

All the above described machines, which could or may be used for automatically cooking thin unleavened loaves, in particular "piade", are not free from drawbacks.

In particular, the overturning of the loaves is not controlled in such a way as to render the positioning of the loaves on the cooking plates repeatable. In this way the use of more than two cooking plates may be dangerous: the loaf, moving along the direction of flow from the loading to the removal station, may miss a cooking plate or be thrown onto a wrong surface by the overturning of a cooking plate. Furthermore, lack of repeatability of the positioning of the loaf may result in cooking the same in a way which is not optimal.

Document US-A-3 215 062 illustrates an apparatus for preparing thin batter cakes or pancakes from a liquid batter mixture by directly subjecting one face thereof to heat, flipping the same over and directly subjecting the other face thereof to heat. Accordingly, means are provided for successively dispensing measured quantities of the batter mixture.

Adapted to receive the liquid batter mixture is a first cooking plate including a cooking surface and means for applying heat thereto, for partially cooking the batter cake by direct contact of one face thereof. The cooking of said partially cooked batter-cake is completed by a second cooking plate having a second cooking surface and means for imparting heat thereto. The first coooking plate is movably mounted on support housing for movement from a normal cooking position into a gravity-releasing position, overlying the second cooking plate and inverted relative thereto. The first cooking plate includes a vertical guard ledge extending from the cooking surface and located near the side of the first cooking plate which corresponds with the axis of rotation about which the movement from the normal cooking position to the gravity-releasing position is effected.

Document US-A- 4 751 876 discloses an apparatus for baking flat discs of dough by the sequential transfer of the dough disc from the top to the bottom of a vertical stack of vertically spaced, heated baking plates. Each of the baking plates is mounted for pivotal movement about a horizontal axis and can be shifted from a horizontal baking position to a horizontally inclined discharge position which insures the gravity discharge of the dough disc from each baking plate onto the one below it. The dough disc is engaged while it is falling from one baking plate to the next lower baking plate by an inverting guide plate which effects the deposit of the falling dough disk onto the next lower baking plate in an inverted position with respect to that which it had while it was being baked on the next upper baking plate. A dough disk is fed onto the upper baking plate from a press, by sliding the disk down a suitable conveyor tray when such a plate is in the horizontal baking position.

Another drawback is that the above described machines are not suited for cooking stuffed, folded and sealed loaves (in particular the so-called "cassoni"), in particular due to the difficulty of cooking the part which corresponds with the thickened folding area.

Aim of the present invention is to overcome the aforesaid drawbacks, making available a machine for cooking and/or for pre-cooking thin unleavened loaves which is able to replicate as exactly as possible, on an industrial scale, the homemaker"s behavior in cooking the "piada", allowing to obtain a high quality product, while at the same time permitting a good and repeatable positioning of the loaves on the cooking plates, thus allowing, in principle, the use of many cooking plates without problems.

Another aim of the present invention is to make available a machine for cooking and/or pre-cooking thin unleavened loaves which allows an optimal cooking of stuffed, folded and sealed loaves, in particular of the so-called "cassoni".

Another aim of the present invention is to make available a machine for cooking and/or pre-cooking thin unleavened loaves which allows to optimize cooking parameters according to the level of cooking and to the final quality of the product.

These aims and others beside, which shall become more readily apparent from the description that follows, are achieved, in accordance with the present invention, by a machine for cooking and/or for pre-cooking thin unleavened loaves in accordance with the main claim and with the accompanying dependent claims.

The invention is described in greater detail hereafter with the aid of the drawings, which show an embodiment provided purely by way of non limiting example.
- Figure 1 shows, respectively: in a) a plan view of the machine of the invention; in b) a lateral view with some parts removed and other sectioned in the plane indicated as A-A; in c) a lateral view according to the same direction of observation of the section.
- Figure 2 shows a detail of the loading station of a variation of the machine of the invention, in particular: the left part is a view of a detail of the machine of the invention, taken on a side opposite to that of the view of Figure 1 in c) and showing a front view of the detail of the loading station; the right part is a side view of the same detail of the loading station taken along the direction from right to left in Figure 1 in c).
- Figure 3 shows a second detail of the loading station of a variation of the machine of the invention.
- Figure 4 shows a cross section of a cooking plate.
- Figure 5 shows: in the upper part a cooking plate in a horizontal receiving position; in the lower part a cooking plate in a reset position rotated below a horizontal plane containing the axis of rotation of the cooking plate, with the loaf shown while sliding and stopping against the checking surface, together with an illustration, in dashed lines, of the cooking plate in an overturned transfer position.
- Figure 6 shows the same as in figure 5, but for a cooking plate having a reset position rotated above the horizontal plane.
- Figure 7 illustrates a variation of a cooking plate according to the invention in a reset position which is respectively rotated below (left part) and above (right part) the horizontal plane.
- Figure 8 illustrates: in a), in a plan and in a side view, an example of a stuffed, folded and sealed loaf (in particular of the type of the so-called "cassone"); in b) and c) the stuffed, folded and sealed loaf while sliding and stopping with its thickened folding area against the checking surface, in two possible reset positions of the invention; in d) a plan view of a part of a cooking plate with some stuffed, folded and sealed loaves stopped with their folding area against the checking surface.
- Figure 9 illustrates: in a) a plan view of a cooking plate with a checking surface having a straight portion against which some stuffed, folded and sealed loaves (e.g. "cassoni") have stopped with their rounded part (sealed edges); in b) the same as in a), but for simple, bare loaves (e.g. "piade").
- Figure 10 illustrates the same as in figure 10, but for a checking surface having curved portions for checking the rounded part of the loaves. In particular, part b) illustrates a variant of the checking surface illustrated in part a).
- Figure 11 shows the same as in figure 10,but for the case of a further variant of a checking surface having curved portions for checking the rounded parts of the loaves.
- Figure 12 shows a schematic plan view of a machine according to the invention wherein each loaf (in particular stuffed, folded and sealed ones), while moving from the loading to the removal station, finds alternatively straight and curved portions of the checking surfaces, all the cooking plates having a reset position rotated on the same side of the horizontal plane (in this case below the horizontal plane).
- Figure 13 shows a schematic lateral view of the machine according to the invention, with some parts taken away the better to highlight others, wherein cooking plates with reset positions on opposite sides of the horizontal plane alternate along the direction from the loading to the removal station (the reset position being shown in dashed lines for each cooking plate).

The present invention is particularly suited to the cooking and/or to the pre-cooking of that particular type of thin unleavened loaf known with the name of "piada" and, therefore, in the description that follows, when generally speaking of loaves reference shall tend to be made to the issues related to the cooking of the "piada" in particular. However, this does not at all intend to exclude the applicability of the present invention also to the cooking and/or to the pre-cooking of any other type of thin unleavened loaf different from the "piada".

Furthermore, the present invention is particularly suited to the cooking and/or to the pre-cooking of that particular type of stuffed, folded and sealed loaf known with the name of "cassone" and, therefore, in the description that follows, when generally speaking of stuffed, folded and sealed loaves reference shell tend to be made to the issues related to the cooking of the "cassone" in particular. However, this does not at all intend to exclude the applicability of the present invention also to the cooking and/or to the pre-cooking of any other type of stuffed, folded and sealed loaves different from the "cassone".

With reference to the figures, a machine 1 for cooking and/or for pre-cooking thin unleavened loaves comprises a cooking surface for cooking thin unleavened loaves 2, heating elements 3 for heating the cooking surface, a loading station 4 for loading the loaves 2 to be cooked on the cooking surface and a removal station 5 for removing the cooked or pre-cooked loaves 2.

The cooking surface comprises a succession of at least two cooking plates 6, positioned consecutively to each other along a direction 7 of flow of the loaves 2 from the loading station 4 to the removal station 5. Each cooking plate 6 is able to rotate about an axis 8 substantially corresponding with its side 9 transversal to the direction 7 of flow from at least a receiving position to an overturned transfer position. In the receiving position the cooking plate 6 considered can receive at least a loaf 2 to be cooked. In the overturned transfer position the cooking plate 6 considered transfers the overturned loaf 2 either onto the cooking plate 6 immediately following it along the direction 7 of flow, if the cooking plate 6 is not the last one of the succession, or on the removal station 5, if the cooking plate 6 considered is the last one of the succession. The first cooking plate 6 along the succession receives the loaf 2 from the loading station 4.

The machine comprises actuating means 10 for actuating the rotation of the cooking plates 6.

Each cooking plate 6 comprises a checking element 29 having a checking surface 30 for the loaf 2 substantially transversal to both the cooking plate 6 and the direction 7 of flow. In particular the checking surface 30 could be perpendicular to one or both of them. The cooking plate 6 is rotatable about the axis 8 of rotation into a reset position inclined by a predetermined angle β with respect to a horizontal plane 31 containing the axis 8 of rotation, so as to make the loaf 2 slide towards and stop against the checking surface 30.

The overturning of the cooking plate 6 exactly reproduces the action of a homemaker in the cooking of the loaf 2 and, being executed rapidly by the actuating means 10, allows to obtain a high quality product. In the short time necessary for its overturning, the cooking plate 6 does not lose an excessive quantity of heat and the loaf 2 is not subjected to harmful cooling. The flow of the loaves 2 from the loading station 4 to the removal station 5 is determined by the rotation in succession of the cooking plates 6 that are overturned to the transfer position. The overturning of each cooking plate 6 to the transfer position may be made to start either from the receiving position or from the reset position (or from any other suitable position chosen as a starting position). Opportunely, the starting position for the overturning of the cooking plate 6 is directly the reset position.

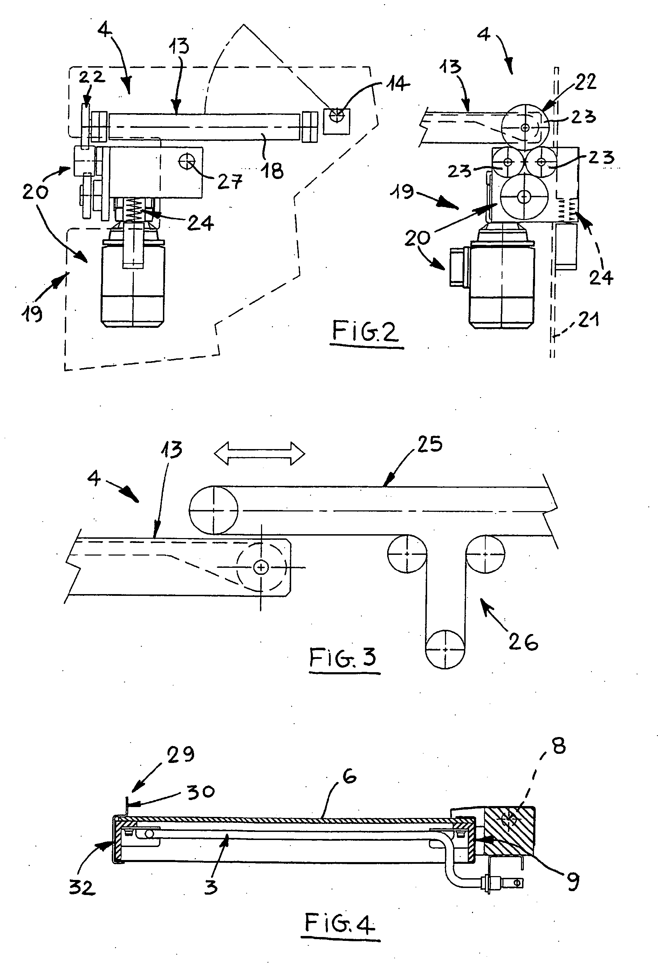

Once the cooking plate 6 has received the loaf 2, rotating the cooking plate 6 to the reset position makes the loaf 2 slide and check against the checking surface 30 of the checking element 29 (as illustrated in figures 5, 6, 7 and 8 with reference to different embodiments of the invention which will be described afterwards), thus always positioning the loaf 2 in a repeatable and reliable manner. Therefore cooking and/or pre-cooking of each loaf 2 may always be carried out on the same cooking plate 6 exactly in the same way. Furthermore, the transfer of each loaf 2 from the same cooking plate 6 onto the successive cooking plate 6 or onto the removal station 5 is always carried out with the loaf 2 starting from the same, identical position. Therefore, the precision of the movement of the loaf 2 along the direction 7 of flow is always guaranteed independently of the number of cooking plates 6 used.

Opportunely, to allow each loaf 2 to be overturned at least twice during the cooking operation, the cooking plates 6 comprised in the succession are at least four. Nevertheless, as above noted, the cooking plates 6 could be even more than four, without any detrimental effect on the precision of either positioning or movement of the loaves 2.

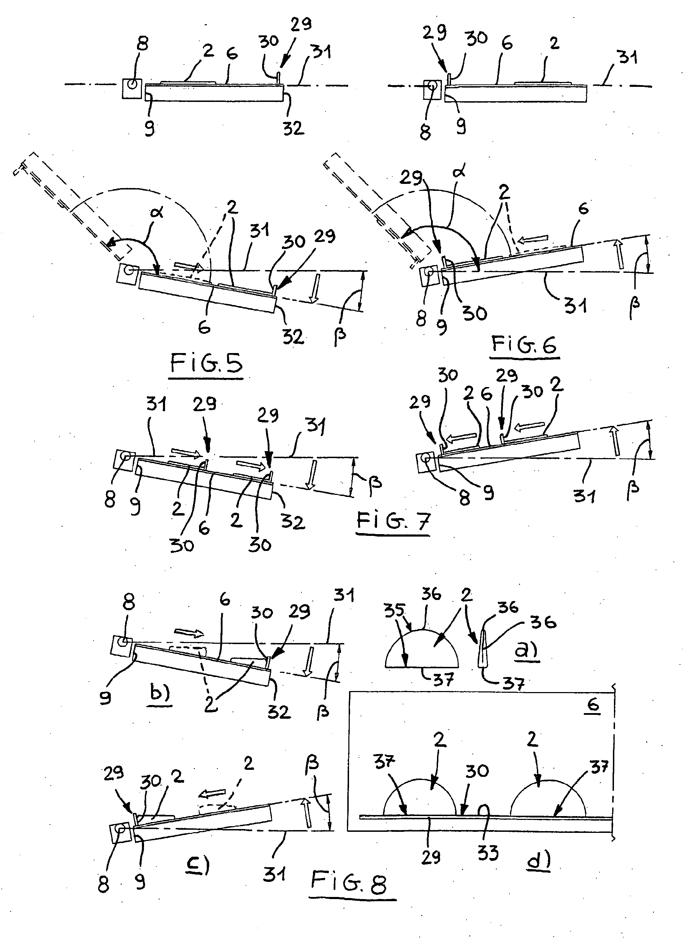

As illustrated in figures 5 and 6 (upper part), the receiving position of the cooking plates 6 may be substantially horizontal, but it is not strictly necessary.

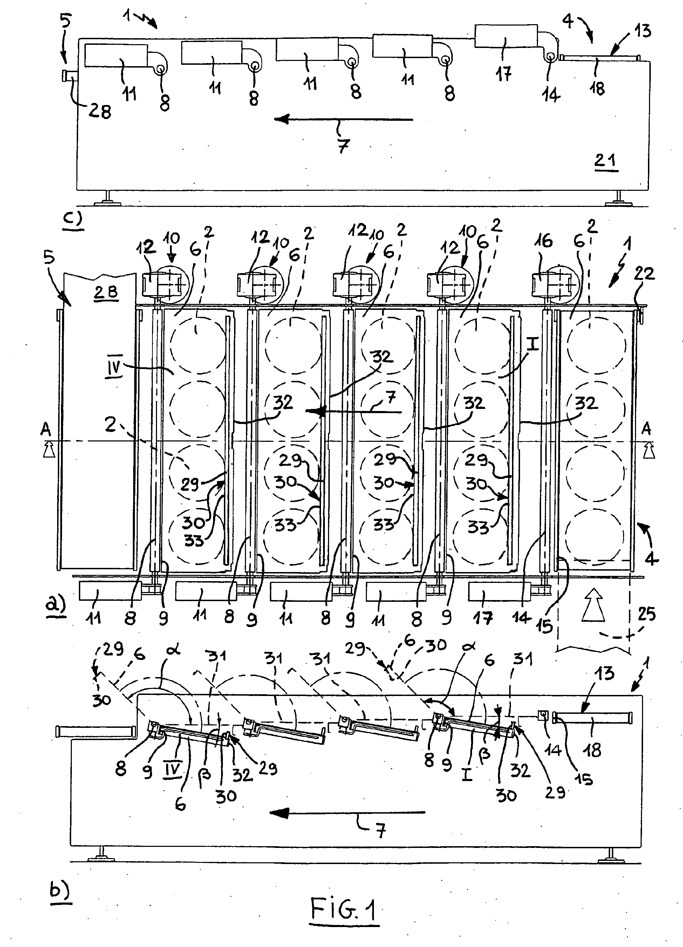

In a first embodiment of the invention, illustrated in particular in figure 1 (but also, with reference to a single cooking plate 6, in figures 4 and 5), in the reset position the cooking plate 6 is rotated below the horizontal plane 31 and the checking element 29 and its checking surface 30 are located near a side 32 of the cooking plate 6 parallel and opposite to the side 9 which corresponds with the axis 8 of rotation (figure 12, too, shows such an arrangement of cooking plates 6).

In this case, advantageously, the reset position may coincide with the receiving position (which is, in this case, different from horizontal...), with the advantage of minimizing the number of movements of the cooking plate 6 for the processing of each loaf 2. Infact, the loaf 2, once discharged onto the cooking plate 6, will directly tend to spontaneously slide towards and stop against the checking element 29, without any need to rotate the cooking plate 6. Furthermore, in case the reset position is the starting position for the overturning of the cooking plate 6, there will be no need to move the cooking plate 6 to bring it to the starting position for its overturning.

In a second embodiment of the invention, as illustrated in figure 6, in the reset position the cooking plate 6 is rotated above the horizontal plane 31, and the checking element 29 and its checking surface 30 are located near the side 9 of the cooking plate 6 which corresponds with the axis 8 of rotation.

In a third embodiment of the invention, illustrated in particular in figure 13 (wherein the reset positions of the cooking plates 6 are indicated in dashed lines) in the reset position the cooking plates 6 which follow each other along the direction 7 of flow are rotated alternatively on opposite sides of the horizontal plane 31. In particular: each cooking plate 6 which, in the reset position, is rotated above the horizontal plane 31 has the checking element 29 and its checking surface 30 located near the side 9 of the cooking plate 6 which corresponds with the axis 8 of rotation; each cooking plate 6 which, in the reset position, is rotated below the horizontal plane 31 has the checking element 29 and its checking surface 30 located near a side 32 of the cooking plate 6 parallel and opposite to the side 9 which corresponds with the axis 8 of rotation.

In general, each cooking plate 6 can allow the loading and processing of at least two thin unleavened loaves 2 at the same time, achieving a valid compromise between high productivity and compactness of the machine, suitable in particular for a small work shop.

Advantageously, alternatively, to allow a maximisation of the productivity, each cooking plate 6 can be structured to allow the loading and processing of a plurality of thin unleavened loaves 2 simultaneously.

These loaves 2 may be arranged on the first cooking plate 6 in a single row parallel to the axis of rotation 8 (as illustrated in figures 1 and 8-12). In this case one checking element 29 for each cooking plate 6 may be sufficient to guarantee that the same arrangement is kept also on all the other cooking plates 6. The loaves 2 may be also arranged in two or more parallel rows on the same cooking plate 6. In this case, opportunely, each cooking plate 6 comprises at least two checking elements 29 with corresponding checking surfaces 30 positioned consecutively to each other along the direction 7 of flow at predetermined distances from one of the sides 9, 32 of the cooking plate 6 transversal to the direction 7 of flow. Obviously, the number of checking elements 29 on each cooking plate 6 should correspond to the number of parallel rows of loaves 2 to be put on each cooking plate 6. An example of this embodiment is shown in figure 7 in the case of two rows of loaves 2 for each cooking plate 6.

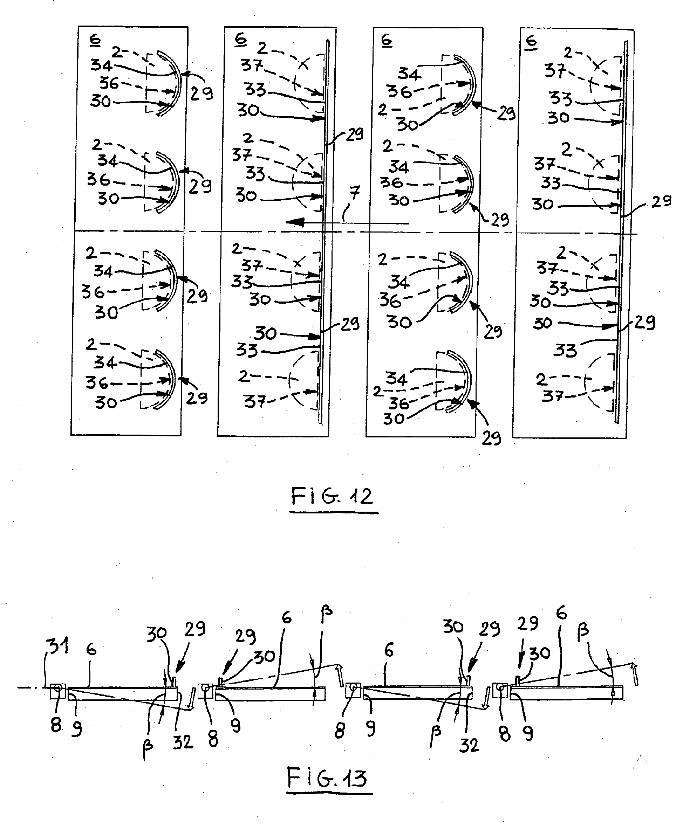

The checking elements 29 may be optionally provided, as shown in figure 10 and in figure 11, with a checking surface 30 having a plurality of parts, each part destined to the interaction with a corresponding loaf 2.

The cooking plates 6 are made of a metallic material (iron or steel of the kind suitable for food processing). They can be at least superiorly coated with a layer of adhesion-preventing material. The checking element 29 and the checking surface 30 may be added onto the cooking plate 6 and solidly connected to its surface. Advantageously, they may be made of the same material as the one of the cooking plate 6 itself. They may also be obtained by folding and/or shaping the cooking plate 6 at an edge thereof. They may be heated, together with the cooking plate 6 to which they belong, either by the heating elements 3 or by respective, independent heating means (not shown). As shown for example in figures 5-9, the checking surface 30 comprises a straight portion 33 for checking an edge of at least a loaf 2.

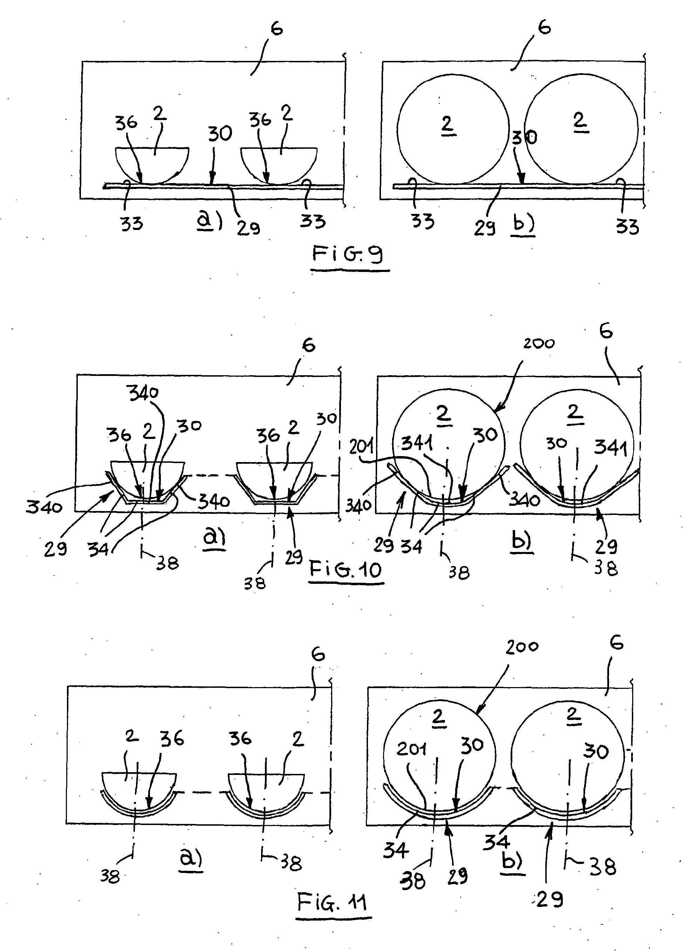

The presence of a straight portion 33, especially when it is heated together with the cooking plate 6, may be particularly advantageous in the case of stuffed, folded and sealed loaves 2 (from now on referred to simply as "stuffed loaves", unless otherwise specified), in particular in the case of "cassoni". To understand this, it must be remembered that, as already mentioned above, this type of stuffed loaf may be obtained in a raw form by: taking a fresh, raw, bare thin unleavened loaf of generally circular shape; distributing stuffing edible material over one half of the loaf; folding the loaf by placing the half which is not covered by the stuffing edible material over the other half, the loaf being still so soft that, once folded, it may be sealed by making its two halves adhere to each other along those parts of its circular edges which become mutually superimposed on each other after the folding of the thin unleavened loaf itself. As shown in figure 8a, the so obtained raw stuffed loaf 2, is generally half-moon shaped. The edges 35 of the stuffed loaf 2 comprise a rounded part 36 which corresponds with the sealed edges of the original bare thin unleavened loaf and which may be said to be a sealing area 36 of the stuffed loaf 2. The edges 35 of the stuffed loaf 2 also comprise a straight part 37 which corresponds with the area of the original, bare thin unleavened loaf interested by its folding and which may be said to be a folding area 37 of the stuffed loaf 2. As already mentioned, the stuffed loaf 2 has a thickness which is greater in the folding area 37 than in the remaining areas of the stuffed loaf 2 and, in particular, than in the sealing area 36. Therefore cooking the stuffed loaf 2 in the folding area 37 is more difficult than cooking it in the remaining areas.

By suitably using the loading station 4, the stuffed loaf 2 may be put on the first cooking plate 6 of the succession so oriented as to have the straight part 37 (i.e. the folding area 37) of its edges 35 perpendicular to the direction 7 of flow, while the rounded part 36 (i.e. the sealing area 36) is oriented either towards the cooking plate 6 which is the next in the succession or towards the other side. In this way, at least one of the cooking plates 6 in the succession will receive the stuffed loaf 2 in such a way that in the reset position the straight portion 33 of the checking surface 30 of the checking element 29 will get in direct contact with the folding area 37 of the stuffed loaf 2.

In an embodiment of the invention wherein all the cooking plates 6 have the reset position on the same side of the horizontal plane 31 and comprise a checking element 29 with a checking surface 30 having a straight portion 33, one cooking plate 6 every two cooking plates 6 following each other in the succession w ill receive the stuffed loaf 2 i n such a way that, in the reset position, the straight portion 33 of the checking surface 30 of the checking element 29 will get in direct contact with the folding area 37 of the stuffed loaf 2.

In an embodiment of the invention like the one shown in figure 13, wherein all the cooking plates 6 comprise a checking element 29 with a checking surface 30 having a straight portion 33, but wherein two cooking plates 6 following each other in the succession have the reset position on opposite sides of the horizontal plane 31, every cooking plate 6 in the succession will receive the stuffed loaf 2 in such a way that, in the reset position, the straight portion 33 of the checking surface 30 of the checking element 29 will get in direct contact with the folding area 37 of the stuffed loaf 2.

If the straight portion 33 is heated together with the respective cooking plate 6 (either by independent heating means or by the heating elements 3), the folding area 37 may thus effectively undergo a cooking step when, as shown in figure 8a-8c, it is in contact with the straight portion 33 itself.

As illustrated in figures 10, 11 and 12, in a further embodiment of the invention the checking surface 30 comprises a curved portion 34 for checking an edge of at least a loaf 2. This curved portion 34 must be so shaped as to receive at least part of the curved (approximately circular) part of the edge of the loaf 2 while, at the same time, reduce the risk of deforming it too much when the loaf 2 is still too soft.

In particular, preferably the curved portion 34 has a flared or funnel-like shape the better to receive the loaf 2. Again, preferably, in general the curved portion 34 is symmetrical with respect to an axis 38 parallel to the direction 7 of flow. The flaring (possibly combined with the symmetry with respect to the axis 38 parallel to the direction 7 of flow) permits, in combination with the inclination of the cooking plate 6 in the reset position, the correct positioning of the loaf 2 on the plate 6 not only along the direction 7 of flow, but also transversally with respect to the latter when the loaf 2, while sliding, is intercepted by the curved portion 34.

The curved portion 34 may comprise two or more straight segments 340, arranged consecutively to each other at an angle with respect to each other. The curved portion 34 may comprise a curved segment 341, which conforms to the curved part 200 of the edge 201 of the loaves 2 (in the case of a stuffed loaf 2, the curved part 200 of the edge 201 corresponds with the rounded part 36 - or sealing area 36 - of the edges 35 of the stuffed loaf 2 itself). This curved segment 341 is preferably developed along an arc of a circumference. The curved portion 34 may comprise both straight segments 340 and curved segments 341 (as illustrated, for example, in figure 10b).

The whole curved portion 34 is preferably developed along an arc of a circumference. When it is composed by two or more straight segments 340, this means that these straight segments 340 are preferably the sides of a polygon which is either inscribed or circumscribed with the circumference (see figure 10a for an example, the ideal circumference not being illustrated therein). If a curved segment 341 is optionally added to the two or more straight segments 340, this means that this curved segment 341 is disposed along a part of the circumference (see figure 10b for an example). When the curved portion 34 is composed only by the curved segment 341, this means that this curved segment 341 is disposed along a part of the circumference (this embodiment is shown in the figures 11a, 11b and 12).

The individual curved portions 34 which constitute the checking surface 30 of a cooking plate 6 may be separated from each other or may be connected to each other (as shown in dashed lines in figures 10a and 11a).

In a particular embodiment, the checking surfaces 30 of the cooking plates 6 are provided with both straight portions 33, each for checking an edge of at least a loaf 2, and curved portions 34, each for checking an edge of at least a loaf 2, so arranged that the interaction with a straight portion 33 of a loaf 2 moving along the direction 7 of flow from one cooking plate 6 to the other is followed by the interaction with a curved portion 34 and vice versa. This configuration, an example of which is shown in figure 12, is particularly suited for cooking stuffed loaves 2. Infact, if the loading station 4 is so structured as to put the stuffed loaves 2 with the correct orientation onto the cooking plate 6 which is the first in the succession, each stuffed loaf 2 will always be overturned onto a cooking plate 6 in such a way that, in the reset position, a curved portion 34 will always get in contact with the rounded part 36 (sealing area 36) of the edges 35 of the stuffed loaf 2, whereas a straight portion 33 will always get in contact with the straight part 37 (folding area 37) of the edges 35 of the stuffed loaf 2. In figure 12 the loaves 2 (in particular the stuffed loafs 2) are shown in dashed lines.

The checking surface 30 of a single cooking plate 6 may be provided with only one type of portion 33, 34 (either straight or curved portion 33, 34). In this case, successive cooking plates 6 along the direction 7 of flow are alternatively provided with straight portions 33 or with curved portions 34 respectively, as shown in figure 12.

In an alternative embodiment (not illustrated), the checking surface 30 of a single cooking plate 6 may comprise both straight and curved portions 33, 34 arranged in a predetermined order. In this case, the checking surfaces 30 of successive cooking plates 6 along the direction 7 of flow are correspondingly so arranged that along the direction of motion of a single loaf 2 a straight portion 33 is followed by a curved portion 34 (or vice versa).

As Figure 4 clearly shows, the machine 1 opportunely may comprise an independent heating element 3 for each cooking plate 6. This solution allows for a greater versatility of the machine, since, advantageously, an independent temperature control can be provided on each cooking plate 6, which, allowing a differentiated choice of the cooking temperatures on each different cooking plate 6, allows an optimal determination of the cooking parameters.

The heating elements 3 could be fixed and only the cooking plate 6 could rotate rapidly. Preferably, however, as Figure 4 clearly shows, the heating element 3 of each cooking plate 6 can be integrally connected thereto and thereby participate in its movements, which allows the loaf 2 never to lose any heat even during the time interval (which in any case is much shorter than in prior art machines) necessary to overturn the loaf 2 itself on the subsequent cooking plate 6.

The heating elements 3 are preferably electrical. The use of electrical, and not gas-fired, heaters minimises safety problems, allows to use smaller work spaces and to have fewer compliance requirements in terms of air circulation. Opportunely, for each cooking plate 6 is provided a support check (not shown herein) for stabilising the receiving position. This is particularly advantageous when the actuating means 10 for actuating the rotation of the cooking plates 6 comprise motors and gear assemblies with non irreversible behaviour, or to reduce the positioning inaccuracy due to any play.

Preferably, the overturned transfer position is rotated, relative to the horizontal plane 31 and in the direction 7 of the flow, by an angle α greater than 140°. In an embodiment of the invention illustrated in Figure 1 the sides 9 of the cooking plates 6 which correspond with the respective axes of rotation 8 lie at decreasing heights along the direction 7 of flow. This allows to minimise the distances between a cooking plate 6 and the plates 6 contiguous thereto, and to achieve values of the overturning angle α approaching 180°.

In general, the checking surface 30 may be located at a predetermined distance from the side 9 of the cooking plate 6 which corresponds with the axis 8 of rotation. This distance and the height of the checking surface 30 relative to the plane of the cooking plate 6 may be suitably chosen to avoid that cooking plates 6 which follow each other in the succession interfere during their movements.

To favour the action of the actuating means 10, which have to rotate the cooking plates 6 very rapidly, the machine 1 advantageously comprises, for each cooking plate 6, a counter-weight 11 integrally associated to the plate 6 at the opposite side of the axis 8 of rotation. The rotary behaviour of the assembly composed by the cooking plate 6 and by its related counter-weight 11 is much more neutral, with obvious advantages on the dimensioning and on the requirements of the actuating means 10.

Opportunely, to enable to maximise versatility in the use of the machine 1, the actuating means 10 for actuating the rotation of the cooking plates 6 comprise a motor 12 for each cooking plate 6, for an independent control of the movements of the cooking plates 6. Preferably, said motors 12 are electrical. Alternatively or in addition, for a greater flexibility of the machine 1, the actuating means 10 are preferably so structured as to allow a selection and/or a regulation of the value of the rotation speed of each cooking plate 6 from the receiving to the transfer position.

Advantageously, the machine 1 comprises a timing and control unit (not shown in the figures) for timing and controlling the movements of the cooking plates 6. This timing and control unit preferably provides for at least a time of partial cooking of the loaf 2, in which the loaf 2 remains on a cooking plate 6, to be adjustable.

In an embodient of the invention, the timing and control unit may be arranged in such a way as to implement a procedure whereby each cooking plate 6, in synchrony with the others:
- waits, when in the receiving position, for an overturning time, to be loaded with a loaf 2 by the overturning of the plate 6 immediately preceding it or, if the plate 6 considered is the first in the succession, by the action of the loading station 4;
- in case the receiving position does not coincide with the reset position, is rotated from the receiving position to the reset position, to make the loaf 2 slide towards and stop against the checking surface 30;
- in case the starting position for the overturning of the plate 6 does not coincide with the reset position, is rotated to said starting position;
- remains in either the receiving or the reset or the starting position for a time which, as a whole, is a time of partial cooking of the loaf 2;
- is overturned in the overturning time, unloading the overturned loaf 2 onto the plate 6 immediately following it or, if the considered plate 6 is the last one in the succession, onto the removal station 5;
- moves back, in a return time, from the overturned transfer position to the receiving position to receive a new loaf 2.

Also provided are safety sensors that give to the timing and control unit the assent to move each given plate 6 only when the plates 6 that are immediately contiguous thereto in the succession are in such a position that there is no possibility of interference between them and the given plate 6.

This procedure allows safely to optimise productive times, since it mutually synchronises the movements of all cooking plates 6 and the behaviour of the loading and removal stations 4, 5.

Moreover, the various times provided, in particular times of partial cooking on each cooking plate 6, can be adjustable. The optimal time of partial cooking depends, among other things, on the temperature of the cooking plates 6. An average value thereof in the order of about ten seconds can allow to obtain good results for the cooking and/or pre-cooking of bare loaves 2.

Very opportunely, in a preferred embodiment of the invention shown in the figures, the loading station 4 comprises a loading plane 13, also able to rotate in the direction 7 of flow about an axis 14 of rotation, substantially corresponding with its side 15 transversal to the direction 7 of flow, from a first receiving configuration to a second overturned configuration.

In the first receiving configuration, the loading plane 13 can receive at least a raw loaf 2, for instance from a feeding belt 25 which, as shown in Figures 1 and 3, can be brought above the loading plane 13 and then withdrawn with the aid of recovery mechanisms 26 (for instance, gravitational, using transmissions and weights).

In the second overturned configuration, the loading plane 13 transfers the overturned loaf 2 onto the cooking plate 6 that is first in the succession (i.e. the one indicated by the Roman numeral I in Figure 1).

Obviously, if the feeding of loaves 2 on the loading plane 13 is accomplished by means of the feeding belt 25, the latter will have to be withdrawn before overturning the loading plane 13 on the cooking plate 6 that is first in the succession (i.e. the one indicated by the Roman numeral I in Figures 5 and 6). The forward-backward motion of the feeding belt 25 is shown in Figure 3, whilst Figure 1 shows the feeding direction.

The loading plane 13 may be provided with checking means for checking the loaf 2 and with a capability to rotate into a reset configuration which are analogous, respectively, to the checking element 29 and to the reset position of each cooking plate 6.

The first receiving configuration may be substantially horizontal but it is not strictly necessary. The reset configuration and the first receiving configuration may coincide, and both could coincide with a starting configuration for the overturning of the loading plane 13.

In this variation, the machine further comprises an actuating motor 16 for actuating the rotation of the loading plane 13. This rotation must preferably be rapid. Opportunely, the loading station 4 also comprises an additional counterweight 17 integrally associated to the loading plane 13 at the opposite side of the axis 14 of rotation to favour the action of the actuating motor 16.

In this way the loading plane 13 may replicate at least some of the movements of each cooking plate 6. The synchronisation of its movements with those of the cooking plates 6 by the timing and control unit is thereby rendered particularly simple. In particular, the loading plane 13 can also be rotated by the same angle α as the one between the horizontal plane 31 and the transfer position of the cooking plates 6. Moreover, when it is in the first receiving configuration, the loading plane 13 may have its side 15 transversal to the direction 7 of flow and corresponding to the axis 14 of rotation located at a slightly greater hight than that of the side 9 of the cooking plate 6 that is first in the succession which corresponds to the axis 8 of rotation of this same cooking plate 6.

Advantageously, in a preferred embodiment of the invention shown in the figures, the loading plane 13 is constituted by at least a conveyor belt 18, recirculating parallel to the axis 14 of rotation with a stepped movement actuated by a motor assembly 19, for feeding loaves 2 in front of that cooking plate 6 that is the first one in the succession of plates 6.

The conveyor belt 18 can be actuated in steps and fed by the feeding belt 25 which, at this point, as shown in Figure 1 in a), can be superposed to the conveyor belt 18 only in correspondence with an end (and, obviously, withdrawn before overturning the loading plane 13, constituted by the conveyor belt 18, on the first cooking plate 6).

Advantageously, a first part 20 of the motor assembly 19, comprising the motorisation, is associated to the body 21 of the machine 1 and does not participate in the motion to overturn the loading plane 13, whilst a second part 22 of the motor assembly 19 is integral with the motion to overturn the loading plane 13 and is coupled with the first part 20 only when the loading plane 13 is in the first receiving configuration.

This avoids the need to drive the whole motor assembly 19 in the motion to overturn the loading plane 13.

In particular, opportunely, as shown in Figure 2, when the loading plane 13 is in the first receiving configuration the coupling between the first and the second part 20, 22 of the motor assembly 19 is provided by the simple contact between friction wheels 23. Advantageously, moreover, as Figure 2 also shows, the first part 20 is vertically movable in opposition to the action of elastic contrasting means 24, said means being loaded by the bearing of the second part 22 on the first part 20 when the loading plane 13 is in the first receiving configuration. This latter solution allows always to obtain an optimal coupling between the first and the second part 20, 22 of the motor assembly 19, when the loading plane 13 is in the first receiving configuration, in a manner that is relatively independent from the mechanical play or from the wear of the friction wheels 23. The vertical movement of the first part 20 can be obtained simply by hinging the first part 20 to the body 21 of the machine 1 (as shown in particular in the left part of Figure 2), for example on a pivot pin 27. This allows always to have a perfect contact between the friction wheels 23 of the first and of the second part 20, 22, since the movement of the first part 20 tends to follow the rotation movement to overturn the loading plane 13.The additional counterweight 17, also, may be dimensioned and located in such a way as to allow a perfect contact between the friction wheels 23, possibly in cooperation with the elastic contrasting means 24.

In general, the overturning of the last cooking plate 6 of the succession (i.e. the one indicated with the Roman numeral IV in Figure 1) on the removal station 5 determines the unloading of the cooked (or pre-cooked) loaves 2 on the removal station 5 itself. The removal station 5 then carries the loaves 2 to the packaging areas. The removal station 5 can comprise one or more slides, or, as shown in the figures, a belt 28 can be positioned in various manners to transport the cooked (or pre-cooked) loaves 2 when required (in the figures, it is positioned parallel to the axis of rotation of the cooking plates 6 and removes the loaves 2 in lateral direction to the machine 1, but it could be oriented differently depending on the requirements and structure of the production line).

In general, the ability separately to set and adjust the temperature of each individual cooking plate 6, coupled with the ability, through the timing and control unit, to adjust the duration of the time of partial cooking of a loaf 2 on each individual cooking plate 6, allows wide freedom in selecting the fundamental cooking parameters. This ability can be very important to enable to obtain a product whose quality level is high and constant, especially in cases such as the production of "piade" and/or "cassoni", in which the final result can also depend on environmental conditions as well as on the characteristics of the dough in use.

With reference to a preferred embodiment, the operation of the invention is as follows.

After being fed with raw loaves 2, the loading plane 13 is overturned, in an overturning time, on the cooking plate 6 indicated, in Figure 1, with the Roman numeral I, depositing thereon loaves 2 to be cooked with a first face in contact with the cooking plate 6. If the receiving position coincides with the reset position, the loaves 2 slide towards and check against their respective portion of the checking surface 30. In case the receiving position is not the reset position, this cooking plate 6 is rotated to the reset position and the loaves 2 slide towards and check against their respective portion of the checking surface 30. In any case, the position of the loaves 2 on the cooking plate 6 is adjusted in a repeatable manner. The loaves 2 are kept on this is cooking plate 6 for a time of partial cooking of the loaf 2 (during which the loading plane 13 is brought to the first receiving configuration in a return time to receive other raw loaves 2). Then the cooking plate 6 is in itself overturned, in an overturning time, on the successive cooking plate 6, depositing thereon the overturned loaves 2 for a cooking phase on the second face. If the receiving position coincides with the reset position, the loaves 2 slide towards and stop against their respective portion of the checking surface 30. In case the receiving position is not the reset position, this successive cooking plate 6 is rotated to the reset position and the loaves 2 slide towards and check against their respective portion of the checking surface 30. In any case, the position of the loaves 2 on the cooking plate 6 is adjusted in a repeatable manner. The loaves 2 are kept on this successive cooking plate 6 for a time of partial cooking, whilst the preceding plate 6 returns, in a return time, to the receiving position to receive, from the loading plane 13, new raw loaves 2. At the end of the time of partial cooking, the cooking plate 6 itself is overturned, in an overturning time, on the subsequent cooking plate 6, depositing thereon the overturned loaves for a subsequent second cooking phase on the first face, and so on. This process goes on in the same way until the last cooking plate 6 in the succession is reached. After having subjected the loaves 2 to a time of partial cooking, the last cooking plate 6 in the succession is itself overturned, in an overturning time, on the removal station 5, which carries the cooked loaves 2 for their packaging, while the cooking plate 6 which precedes it in the succession then returns, in a return time, to its receiving position to receive, from the previous cooking plate 6, new loaves 2 and so on.

The invention achieves important advantages.

First of all, it is apparent that whatever the number of cooking plates 6 provided in the succession, there is no risk of error in the positioning of the loaves 2 during the transfer from one cooking plate to the other. Furthermore the traditional manual cooking method is exactly reproduced, whilst maintaining high productivity levels. This is particularly true, in an embodiment of the invention, in the case of the cooking of stuffed loaves, in particular of the type of the so called "cassoni". The quality standard reached by the final product is high. It is possible to set and optimise in detail the parameters for cooking the loaves according to requirements, in particular times and temperatures, thereby allowing a high versatility of operation of the machine. The invention thus conceived can be subject to numerous modifications and variations, without thereby departing from the scope of the inventive concept that characterises it. Moreover, all components can be replaced by other technically equivalent elements. In practice all materials used, as well as the shapes and dimensions of the various components, can be any depending on requirements.

## Claims

1. Machine (1) for cooking and/or for pre-cooking thin unleavened loaves, comprising a cooking surface for cooking thin unleavened loaves (2), heating elements (3) for heating the cooking surface, a loading station (4) for loading the loaves (2) to be cooked on the cooking surface, a removal station (5) for removing the cooked or pre-cooked loaves (2), wherein:
- the cooking surface comprises a succession of at least two cooking plates (6), positioned consecutively to each other along a direction (7) of flow of the loaves (2) from the loading station (4) to the removal station (5), each cooking plate (6) being able to rotate about an axis (8) substantially transversal to the direction (7) of flow, at least from a receiving position in which the cooking plate (6) considered can receive at least a loaf (2) to be cooked, to a transfer position in which the cooking plate (6) considered transfers the overturned loaf (2) either on the cooking plate (6) immediately following it along the direction (7) of flow, if the cooking plate (6) considered is not the last one in the succession, or on the removal station (5), if the cooking plate (6) considered is the last one in the succession, the first cooking plate (6) along the succession receiving the loaf (2) from the loading station (4);
- the machine comprises actuating means (10) for actuating the rotation of the at least two cooking plates (6) ;
**characterized in that**:
- the axis (8) of each cooking plate (6) substantially corresponds with a side (9) of the plate (6) ;
- in the transfer position, the cooking plate (6) considered is overturned ;
- each cooking plate (6) comprises a checking element (29) having a checking surface (30) for the loaf (2) substantially transversal to both the cooking plate (6) and the direction (7) of flow, the cooking plate (6) being rotatable about the axis (8) of rotation into a reset position inclined by a predetermined angle (β) with respect to a horizontal plane (31) containing the axis (8) of rotation, so as to make the loaf (2) slide towards and stop against the check surface (30);
- in the reset position the cooking plate (6) is rotated below the horizontal plane (31) containing the axis (8) of rotation ;
- the checking element (29) and its checking surface (30) are located near a side (32) of the cooking plate (6) parallel and opposite to the side (9) which corresponds with the axis (8) of rotation.

2. Machine (1) as claimed in claim 1, **characterized in that** the cooking plates (6) of the succession are at least four.

3. Machine (1) as claimed in claim 1 or 2, **characterized in that** the reset position coincides with the receiving position.

4. Machine (1) as claimed in anyone of the previous claims, **characterized**
**in that** the checking element (29) and the checking surface (30) are obtained by folding and/or shaping the cooking plate (6) at an edge thereof.

5. Machine (1) as claimed in anyone of the previous claims, **characterized in that** the checking surface (30) comprises a straight portion (33) for checking an edge of at least a loaf (2).

6. Machine (1) as claimed in anyone of the previous claims, **characterized in that** the checking surface (30) comprises a curved portion (34) for checking an edge of at least a loaf (2).

7. Machine (1) as claimed in claim 6, **characterized in that** the curved portion (34) has a flared or funnel-like shape the better to receive the loaf 2.

8. Machine (1) as claimed in claim 6 or 7, **characterized in that** the curved portion 34) is symmetrical with respect to an axis (38) parallel to the direction (7) of flow.

9. Machine (1) as claimed in anyone of the claims from 5 to 8, **characterized in that** the checking surfaces (30) of the cooking plates (6) are provided with both straight portions (33), each for checking an edge of at least a loaf (2), and curved portions (34), each for checking an edge of at least a loaf (2), so arranged that the interaction with a straight portion (33) of a loaf (2) moving along the direction (7) of flow from one cooking plate (6) to the other is followed by the interaction with a curved portion (34) and vice versa.

10. Machine (1) as claimed in anyone of the claims from 6 to 9, **characterized in that** the curved portion (34) comprises at least two straight segments (340) arranged consecutively to each other at an angle with respect to each other.

11. Machine (1) as claimed in anyone of the claims from 6 to 9, **characterized in that** the curved portion (34) comprises a plurality of straight segments (340) arranged consecutively to each other at an angle with respect to each other.

12. Machine (1) as claimed in anyone of the claims from 6 to 11, **characterized in that** the curved portion (34) comprises a curved segment (341) which is conformed to a curved part (200) of an edge (201) of the loaf (2).

13. Machine (1) as claimed in claim 12, **characterized in that** the curved segment (341) is developed along an arc of a circumference.

14. Machine (1) as claimed in claim 6 or 9 or 11 or 12, **characterized in that** the curved portion (34) is developed along an arc of a circumference.

15. Machine (1) as claimed in anyone of the previous claims, **characterized in that** it comprises, for each cooking plate (6), a counterweight (11) integrally associated to the plate (6) at the opposite side of the axis (8) of rotation to favor the action of the actuating means (10).

16. Machine (1) as claimed in anyone of the previous claims, **characterized in that** for each cooking plate (6) is provided a support check for the stabilization of the receiving position.

17. Machine (1) as claimed in any of the previous claims, **characterized in that** the actuating means (10) are so structured as to allow a selection and/or a regulation of the value of the rotation speed of each cooking plate (6) from the receiving to the transfer position.

18. Machine (1) as claimed in any of the previous claims, **characterized in that** the actuating means (10) for actuating the rotation of the cooking plates (6) comprise a motor (12) for each cooking plate (6), for an independent control of the movements of the cooking plates (6).

19. Machine (1) as claimed in any of the previous claims, **characterized in that** it comprises a timing and control unit for timing and controlling the movements of the cooking plates (6).

20. Machine (1) as claimed in claim 23, **characterized in that** at least a time of partial cooking of the loaf (2), in which the loaf (2) remains on a cooking plate (6), is adjustable.

21. Machine (1) as claimed in any of the previous claims, **characterized in that** the loading station (4) comprises:
- a loading plane (13), also able to rotate in the direction (7) of flow about an axis (14) of rotation substantially corresponding with its side (15) transversal to the direction (7) of flow from a first receiving configuration, in which the loading plane (13) can receive at least a raw loaf (2), to a second overturned configuration, in which the loading plane (13) transfers the overturned loaf (2) on the cooking plate (6) that is first in the succession;
- an actuating motor (16) for actuating the rotation of the loading plane (13).

22. Machine (1) as claimed in claim 21, **characterized in that** the first configuration is substantially horizontal.

23. Machine as claimed in claim 21 or 22, **characterized in that** the loading plane (13) is provided with checking means for checking the loaf (2) and with a capability to rotate into a reset configuration which are analogous, respectively, to the checking element (29) and to the reset position of each cooking plate (6).

24. Machine (1) as claimed in any of the claims from 21 to 23, **characterized in that** the loading station (4) comprises an additional counterweight (17) integrally associated to the loading plane (13) at the opposite side of the axis (14) of rotation to favor the action of the actuating motor (16).

25. Machine (1) as claimed in any of the claims from 21 to 24, **characterized in that** the loading plane (13) is constituted by at least a conveyor belt (18), recirculating parallel to the axis of rotation (14) with a stepped movement actuated by a motor assembly (19), for feeding loaves (2) in front of the cooking plate (6) that is the first in the succession of plates (6).

26. Machine (1) as claimed in claim 25, **characterized in that** a first part (20) of the motor assembly (19), comprising the motorization, is associated to the body (21) of the machine (1) and does not participate in the motion to overturn the loading plane (13), whilst a second part (22) of the motor assembly (19) is integral to the motion to overturn the loading plane (13) and is coupled with the first part (20) only when the loading plane (13) is in the first receiving configuration.

27. Machine (1) as claimed in claim 26, **characterized in that** when the loading plane is in the first receiving configuration the coupling between the first and the second part (20, 22) of the motor assembly (19) is given by the contact between friction wheels (23).

28. Machine (1) as claimed in claim 27, **characterized in that** the first part (20) is vertically movable in opposition to the action of elastic contrast means (24), the latter being loaded by the bearing of the second part (22) on the first part (20) when the loading plane (13) is in the first receiving configuration.

29. Machine (1) as claimed in any of the previous claims, **characterized in that** each cooking plate (6) allows to load and process at least two thin unleavened loaves (2) simultaneously.

30. Machine as claimed in claim 29, **characterized in that** each cooking plate (6) allows to load and process a plurality of thin unleavened loaves (2) simultaneously.

31. Machine (1) as claimed in claim 29 or 30, **characterized in that** each cooking plate (6) comprises at least two checking elements (29) with corresponding checking surfaces (30) positioned consecutively to each other along the direction (7) of flow at predetermined distances from one of the sides (9,32) of the cooking plate 6 transversal to the direction (7) of flow.

## Patentansprüche

1. Maschine zum Kochen und/oder Vorkochen von dünnen, treibmittelfreien Fladen, enthaltend eine Kochfläche zum Kochen von dünnen, treibmittelfreien Fladen (2), Heizelemente (3) zum Heizen der Kochfläche, eine Ladestation (4) zum Laden der auf der Kochfläche zu kochenden Fladen (2), eine Entnahmestation (5) zum Entnehmen der gekochten oder vorgekochten Fladen (2), bei welcher:
- die Kochfläche eine Folge von wenigstens zwei Kochplatten (6) enthält, positioniert aufeinanderfolgend entlang einer Flussrichtung (7) der Fladen (2) von der Ladestation (4) zu der Entnahmestation (5), wobei jede Kochplatte (6) in der Lage ist, sich um eine Achse (8) im wesentlichen quer zu der Flussrichtung (7) zu drehen, und zwar wenigstens aus einer Aufnahmeposition, in welcher die betreffende Kochplatte (6) wenigstens einen zu kochenden Fladen (2) aufnehmen kann, in eine Transferposition, in welcher die betreffende Kochplatte (6) den umgedrehten Fladen (2) entweder auf die unmittelbar in der Flussrichtung (7) folgende Kochplatte (6) transferiert, wenn die betreffende Kochplatte (6) nicht die letzte in der Folge ist, oder an die Entnahmestation (5), wenn die betreffende Kochplatte (6) die letzte in der Folge ist, wobei die erste Kochplatte (6) entlang dieser Folge den Fladen (2) von der Ladestation (4) übernimmt;
- wobei die Maschine Antriebsmittel (10) zum Antreiben der Umdrehung der wenigstens zwei Kochplatten (6) enthält;
**dadurch gekennzeichnet, dass**
- die Achse (8) einer jeden Kochplatte (6) im wesentlichen einer Seite (9) der Platte (6) entspricht;
- in der Transferposition die betreffende Kochplatte (6) umgedreht ist;
- jede Kochplatte (6) ein Anschlagelement (29) mit einer Anschlagfläche (30) für den Fladen (2) enthält, im wesentlichen quer zu der Kochplatte (6) und zu der Flussrichtung (7), wobei die Kochplatte (6) um die Drehachse (8) drehbar ist in eine Ausgangsposition, geneigt um einen vorgegebenen Winkel (β) im Verhältnis zu einer die Drehachse (8) enthaltenden horizontalen Ebene (31), so dass der Fladen (2) zu der Anschlagfläche (30) hin gleiten und an dieser anliegen kann;
- in der Ausgangsposition die Kochplatte (6) unter die horizontale Ebene (31) gedreht ist, welche die Drehachse (8) enthält;
- das Anschlagelement (29) und seine Anschlagfläche (30) dicht an einer Seite (32) der Kochplatte (6) angeordnet sind, parallel und gegenüberliegend der Seite (9), welche der Drehachse (8) entspricht.

2. Maschine (1) nach Patentanspruch 1, **dadurch gekennzeichnet, dass** die Kochplatten (6) in der Folge wenigstens vier sind.

3. Maschine (1) nach Patentanspruch 1 oder 2, **dadurch gekennzeichnet, dass** die Ausgangsposition mit der Aufnahmeposition übereinstimmt.

4. Maschine (1) nach einem beliebigen der vorstehenden Patentansprüche, **dadurch gekennzeichnet, dass** das Anschlagelement (29) und die Anschlagfläche (30) durch Biegen und/oder Formen der Kochplatte (6) an einer ihrer Kante erhalten sind.

5. Maschine (1) nach einem beliebigen der vorstehenden Patentansprüche, **dadurch gekennzeichnet, dass** die Anschlagfläche (30) einen geraden Abschnitt (33) für den Anschlag eines Randes von wenigstens einem Fladen (2) enthält.

6. Maschine (1) nach einem beliebigen der vorstehenden Patentansprüche, **dadurch gekennzeichnet, dass** die Anschlagfläche (30) einen gebogenen Abschnitt (34) für den Anschlag eines Randes wenigstens eines Fladens (2) hat.

7. Maschine (1) nach Patentanspruch 6, **dadurch gekennzeichnet, dass** der gebogene Abschnitt (34) eine geschweifte oder trichterartige Form hat, um den Fladen (2) besser aufzunehmen.

8. Maschine (1) nach Patentanspruch 6 oder 7, **dadurch gekennzeichnet, dass** der gebogene Abschnitt (34) symmetrisch ist im Verhältnis zu einer Achse (38) parallel zu der Flussrichtung (7).

9. Maschine (1) nach einem beliebigen der Patentansprüche von 5 bis 8, **dadurch gekennzeichnet, dass** die Anschlagflächen (30) der Kochplatten (6) mit geraden Abschnitten (33) versehen sind, jeder für den Anschlag eines Randes von wenigstens einem Fladen (2), und mit gebogenen Abschnitten (34), jeder für den Anschlag eines Randes von wenigstens einem Fladen (2), so angeordnet, dass dem Zusammenwirken eines sich entlang der Flussrichtung (7) von einer Kochplatte (6) zu der anderen bewegenden Fladens (2) mit einem geraden Abschnitt (33) das Zusammenwirken mit einem gebogenen Abschnitt (34) folgt und umgekehrt.

10. Maschine (1) nach einem beliebigen der Patentansprüche von 6 bis 9, **dadurch gekennzeichnet, dass** der gebogene Abschnitt (34) wenigstens zwei gerade Segmente (340) enthält, angeordnet aufeinanderfolgend und in einem Winkel zueinander.

11. Maschine (1) nach einem beliebigen der Patentansprüche von 6 bis 9, **dadurch gekennzeichnet, dass** der gebogene Abschnitt (34) eine Anzahl von geraden Segmenten (340) enthält, angeordnet aufeinanderfolgend und in einem Winkel zueinander.

12. Maschine (1) nach einem beliebigen der Patentansprüche von 6 bis 11, **dadurch gekennzeichnet, dass** der gebogene Abschnitt (34) ein gebogenes Segment (341) enthält, welcher entsprechend einem gebogenen Teil (200) eines Randes (201) des Fladens (2) ausgebildet ist.

13. Maschine (1) nach Patentanspruch 12, **dadurch gekennzeichnet, dass** das gebogene Segment (341) sich entlang einem Umfangsbogen entwickelt.

14. Maschine (1) nach Patentanspruch 6 oder 9 oder 11 oder 12, **dadurch gekennzeichnet, dass** der gebogene Abschnitt (34) sich entlang einem Umfangsbogen entwickelt.

15. Maschine (1) nach einem beliebigen der Patentansprüche, **dadurch gekennzeichnet, dass** sie für jede Kochplatte (6) ein fest der Platte (6) zugeordnetes Gegengewicht (11) enthält, und zwar auf der entgegengesetzten Seite von der Drehachse (8), um die Wirkung der Antriebsmittel (10) zu begünstigen.

16. Maschine (1) nach einem beliebigen der Patentansprüche, **dadurch gekennzeichnet, dass** für jede Kochplatte (6) ein Auflageanschlag zur Stabilisierung der Aufnahmeposition vorgesehen ist.

17. Maschine (1) nach einem beliebigen der Patentansprüche, **dadurch gekennzeichnet, dass** die Antriebsmittel so ausgelegt sind, dass sie eine Wahl und/oder Regulierung des Wertes der Umdrehungsgeschwindigkeit einer jeden Kochplatte (6) von der Aufnahme- in die Transferposition erlauben.

18. Maschine (1) nach einem beliebigen der Patentansprüche, **dadurch gekennzeichnet, dass** die Antriebsmittel (10) zum Antreiben der Umdrehung der Kochplatten (6) einen Motor (12) für jede Kochplatte (6) enthalten, und zwar für eine unabhängige Steuerung der Bewegungen der Kochplatten (6).

19. Maschine (1) nach einem beliebigen der Patentansprüche, **dadurch gekennzeichnet, dass** sie eine Taktgeber- und Steuereinheit zum Takten und Steuern der Bewegungen der Kochplatten (6) enthält.

20. Maschine (1) nach Patentanspruch 23, **dadurch gekennzeichnet, dass** wenigstens eine Dauer des teilweisen Kochens des Fladens (2), während welcher der Fladen (2) auf einer Kochplatte (6) verbleibt, regulierbar ist.

21. Maschine (1) nach einem beliebigen der Patentansprüche, **dadurch gekennzeichnet, dass** die Ladestation (4) wie folgt enthält:
- eine Ladeebene (13), ebenfalls in der Lage, sich in der Flussrichtung (7) um eine Drehachse (14) zu drehen, die im wesentlichen ihrer Seite (15) quer zu der Flussrichtung (7) entspricht, und zwar aus einer ersten Aufnahmekonfiguration, in welcher die Ladeebene (13) wenigstens einen ungekochten Fladen (2) aufnehmen kann, in eine zweite, umgedrehte Konfiguration, in welcher die Ladeebene (13) den umgedrehten Fladen (2) auf die Kochplatte (6) transferiert, welche die erste in der Folge ist;
- einen Antriebsmotor (16) für den Antrieb der Umdrehung der Ladeebene (13).

22. Maschine (1) nach Patentanspruch 21, **dadurch gekennzeichnet, dass** die erste Konfiguration im wesentlichen horizontal ist.

23. Maschine (1) nach Patentanspruch 21 oder 22, **dadurch gekennzeichnet, dass** die Ladeebene (13) mit Anschlagmitteln für den Anschlag des Fladens (2) versehen ist, sowie mit der Möglichkeit, sich in eine Ausgangskonfiguration zu drehen, welche analog sind im Verhältnis zu dem Anschlagelement (29) und zu der Ausgangsposition einer jeden Kochplatte (6).

24. Maschine (1) nach einem beliebigen der Patentansprüche von 21 bis 23, **dadurch gekennzeichnet, dass** die Ladestation (4) ein zusätzliches Gegengewicht (17) enthält, fest der Ladeebene (13) zugeordnet, und zwar auf der entgegengesetzten Seite der Drehachse (14), um die Wirkung des Antriebsmotors (16) zu begünstigen.

25. Maschine (1) nach einem beliebigen der Patentansprüche von 21 bis 24, **dadurch gekennzeichnet, dass** die Ladeebene (13) aus wenigstens einem Förderband (18) besteht, dass sich parallel zu der Drehachse (14) und angetrieben durch eine Motorgruppe (19) mit einer schrittweisen Bewegung dreht, um von vom der Kochplatte (6), welche die erste der Folge von Platten (6) ist, die Fladen (2) zuzuführen.

26. Maschine (1) nach Patentanspruch 25, **dadurch gekennzeichnet, dass** ein erster Teil (20) der Motorgruppe (19), enthaltend den Antrieb, dem Körper (21) der Maschine (1) zugeordnet ist und nicht an der Bewegung teilnimmt, um die Ladeebene (13) umzudrehen, während ein zweiter Teil (22) der Motorgruppe (19) in die Bewegung zum Umdrehen der Ladeebene (13) einbezogen und mit dem ersten Teil (20) nur dann gekoppelt ist, wenn sich die Ladeebene (13) in der ersten Aufnahmekonfiguration befindet.

27. Maschine (1) nach Patentanspruch 26, **dadurch gekennzeichnet, dass**, wenn die Ladeebene sich in der ersten Aufnahmekonfiguration befindet, die Kupplung zwischen dem ersten und dem zweiten Teil (20, 22) der Motorgruppe (19) durch den Kontakt zwischen den Kupplungsrädem (23) gegeben ist.

28. Maschine (1) nach Patentanspruch 27, **dadurch gekennzeichnet, dass** der erste Teil (20) vertikal entgegen der Wirkung von elastischen Gegenmitteln (24) beweglich ist, wobei letztere durch den Druck des zweiten Teils (22) auf den ersten Teil (20) gespannt sind, wenn sich die Ladeebene (13) in der ersten Aufnahmekonfiguration befindet.

29. Maschine (1) nach einem beliebigen der vorstehenden Patentansprüche, **dadurch gekennzeichnet, dass** es jede Kochplatte (6) erlaubt, wenigstens zwei dünne, treibmittelfreie Fladen (2) gleichzeitig zu laden und zu verarbeiten.

30. Maschine (1) nach Patentanspruch 29, **dadurch gekennzeichnet, dass** es jede Kochplatte (6) erlaubt, eine Anzahl von dünnen, treibmittelfreien Fladen (2) zu laden und zu verarbeiten.

31. Maschine (1) nach Patentanspruch 29 oder 30, **dadurch gekennzeichnet, dass** jede Kochplatte (6) wenigstens zwei Anschlagelemente (29) mit den entsprechenden Anschlagflächen (30) enthält, positioniert aufeinanderfolgend entlang der Flussrichtung (7) mit vorgegebenen Abständen von einer der Seiten (9, 32) der Kochplatte (6) und quer zu der Flussrichtung (7).

## Revendications

1. Appareil (1) de cuisson et/ou précuisson de miches minces sans agent levant, comprenant une surface de cuisson pour cuire des miches minces (2) sans agent levant, des éléments de chauffage (3) pour chauffer la surface de cuisson, une station de chargement (4) pour charger les miches (2) à cuire sur la surface de cuisson, une station d'enlèvement (5) pour enlever les miches (2) cuites ou précuites, dans lequel:
- la surface de cuisson comprend une succession d'au moins deux plaques de cuisson (6), positionnées consécutivement entre elles le long d'une direction (7) de flux des miches (2) de la station de chargement (4) à la station d'enlèvement (5), chaque plaque de cuisson (6) pouvant pivoter autour d'un axe (8) substantiellement transversal à la direction (7) de flux, au moins d'une position de réception dans laquelle la plaque de cuisson (6) considérée peut recevoir au moins une miche (2) à cuire, à une position de transfert dans laquelle la plaque de cuisson (6) considérée transfère la miche (2) retournée soit sur la plaque de cuisson (6) immédiatement suivante le long de la direction (7) de flux, si la plaque de cuisson (6) considérée n'est pas la dernière de la succession, soit sur la station d'enlèvement (5), si la plaque de cuisson (6) considérée est la dernière de la succession, la première plaque de cuisson (6) le long de la succession recevant la miche (2) de la station de chargement (4);
- l'appareil comprend des moyens d'actionnement (10) pour actionner la rotation des au moins deux plaques de cuisson (6);
**caractérisé en ce que**:
- l'axe (8) de chaque plaque de cuisson (6) correspond substantiellement à un côté (9) de la plaque (6);
- dans la position de transfert, la plaque de cuisson (6) considérée est retournée;
- chaque plaque de cuisson (6) comprend un élément d'arrêt (29) pourvu d'une surface d'arrêt (30) pour la miche (2) substantiellement transversale aussi bien à la plaque de cuisson (6) qu'à la direction (7) de flux, la plaque de cuisson (6) étant pivotable autour de l'axe (8) de rotation dans une position de réinitialisation inclinée selon un angle (β) par rapport à un plan horizontal (31) contenant l'axe (8) de rotation, de manière à ce que la miche (2) glisse vers et s'arrête contre la surface d'arrêt (30);
- dans la position de repos, la plaque de cuisson (6) est pivotée au-dessous du plan horizontal (31) contenant l'axe (8) de rotation;
- l'élément d'arrêt (29) et sa surface d'arrêt (30) sont situées à proximité d'un côté (32) de la plaque de cuisson (6) parallèle et opposé au côté (9) correspondant à l'axe (8) de rotation.

2. Appareil (1) selon la revendication 1, **caractérisé en ce que** les plaques de cuisson (6) de la succession sont au moins au nombre de quatre.

3. Appareil (1) selon la revendication 1 ou 2, **caractérisé en ce que** la position de réinitialisation coïncide avec la position de réception.

4. Appareil (1) selon n'importe laquelle des revendications précédentes, **caractérisé en ce que** l'élément d'arrêt (29) et la surface d'arrêt (30) sont obtenus par pliage et/ou usinage de la plaque de cuisson (6) sur un de ses bords.

5. Appareil (1) selon n'importe laquelle des revendications précédentes, **caractérisé en ce que** la surface d'arrêt (30) comprend une partie droite (33) pour l'arrêt d'un bord d'au moins une miche (2).

6. Appareil (1) selon n'importe laquelle des revendications précédentes, **caractérisé en ce que** la surface d'arrêt (30) comprend une partie courbée (34) pour l'arrêt d'un bord d'au moins une miche (2).

7. Appareil (1) selon la revendication 6, **caractérisé en ce que** la partie courbée (34) présente une forme évasée ou en entonnoir pour mieux recevoir la miche 2.

8. Appareil (1) selon la revendication 6 ou 7, **caractérisé en ce que** la partie courbée (34) est symétrique par rapport à un axe (38) parallèle à la direction (7) du flux.

9. Appareil (1) selon n'importe laquelle des revendications 5 à 8, **caractérisé en ce que** les surfaces d'arrêt (30) des plaques de cuisson (6) sont pourvues aussi bien de parties droites (33), chacune desquelles pour arrêter un bord d'au moins une miche (2), que de parties courbées (34), chacune desquelles pour arrêter un bord d'au moins une miche (2), disposées de manière à ce que l'interaction avec une partie droite (33) d'une miche (2) se déplaçant le long de la direction (7) du flux d'une plaque de cuisson (6) à l'autre soit suivi de l'interaction avec une partie courbée (34) et vice versa.

10. Appareil (1) selon n'importe laquelle des revendications 6 à 9, **caractérisé en ce que** la partie courbée (34) comprend au moins deux segments droits (340) disposés consécutivement entre eux selon un angle l'un par rapport à l'autre.

11. Appareil (1) selon n'importe laquelle des revendications 6 à 9, **caractérisé en ce que** la partie courbée (34) comprend une pluralité de segments droits (340) disposés consécutivement entre eux selon un angle l'un par rapport à l'autre.

12. Appareil (1) selon n'importe laquelle des revendications 6 à 11, **caractérisé en ce que** la partie courbée (34) comprend un segment courbé (341) conformé sur une partie courbée (200) d'un bord (201) de la miche (2).

13. Appareil (1) selon la revendication 12, **caractérisé en ce que** le segment courbé (341) se développe le long d'un arc de circonférence.

14. Appareil (1) selon la revendication 6 ou 9 ou 11 ou 12, **caractérisé en ce que** la partie courbée (34) se développe le long d'un arc de circonférence.

15. Appareil (1) selon n'importe laquelle des revendications précédentes, **caractérisé en ce qu'**il comprend, pour chaque plaque de cuisson (6), un contrepoids (11) intégralement associé à la plaque (6) du côté opposé à l'axe (8) de rotation pour favoriser l'action des moyens d'actionnement (10).

16. Appareil (1) selon n'importe laquelle des revendications précédentes, **caractérisé en ce que** pour chaque plaque de cuisson (6) est prévu un arrêt de support pour la stabilisation de la position de réception.

17. Appareil (1) selon n'importe laquelle des revendications précédentes, **caractérisé en ce que** les moyens d'actionnement (10) sont structurés de manière à permettre une sélection et/ou une régulation de la valeur de la vitesse de rotation pour chaque plaque de cuisson (6) de la position de réception à la position de transfert.

18. Appareil (1) selon n'importe laquelle des revendications précédentes, **caractérisé en ce que** les moyens d'actionnement (10) pour effectuer la rotation des plaques de cuisson (6) comprennent un moteur (12) pour chaque plaque de cuisson (6), pour un contrôle indépendant des mouvements des plaques de cuisson (6).

19. Appareil (1) selon n'importe laquelle des revendications précédentes, **caractérisé en ce qu'**il comprend une unité de temporisation et de contrôle pour temporiser et contrôler les mouvements des plaques de cuisson (6).

20. Appareil (1) selon la revendication 23, **caractérisé en ce qu'**au moins un temps de cuisson partielle de la miche (2), dans lequel la miche (2) repose sur une plaque de cuisson (6), est réglable.

21. Appareil (1) selon n'importe laquelle des revendications précédentes, **caractérisé en ce que** la station de chargement (4) comprend:
- un plan de chargement (13), pouvant également pivoter dans la direction (7) de flux autour d'un axe (14) de rotation correspondant substantiellement avec son côté (15) transversal à la direction (7) de flux d'une première configuration de réception, dans laquelle le plan de chargement (13) peut recevoir au moins une miche crue (2), à une seconde configuration retournée, dans laquelle le plan de chargement (13) transfère la miche retournée (2) sur la plaque de cuisson (6) qui est la première dans la succession;
- un moteur d'actionnement (16) pour effectuer la rotation du plan de chargement (13).

22. Appareil (1) selon la revendication 21, **caractérisé en ce que** la première configuration est substantiellement horizontale.

23. Appareil (1) selon la revendication 21 ou 22, **caractérisé en ce que** le plan de chargement (13) est pourvu de moyens d'arrêt pour arrêter la miche (2) et d'une capacité de pivoter dans une configuration de repos qui sont analogues respectivement à l'élément d'arrêt (29) et à la position de réinitialisation de chaque plaque de cuisson (6).

24. Appareil (1) selon n'importe laquelle des revendications 21 à 23, **caractérisé en ce que** la station de chargement (4) comprend un contrepoids additionnel (17) intégralement associé au plan de chargement (13) du côté opposé à l'axe (14) de rotation pour favoriser l'action du moteur d'actionnement (16).

25. Appareil (1) selon n'importe laquelle des revendications 21 à 24, **caractérisé en ce que** le plan de chargement (13) est constitué d'au moins un tapis roulant (18), recirculant parallèlement à l'axe de rotation (14) avec un mouvement pas-à-pas actionné par un ensemble moteur (19), pour alimenter les miches (2) en face de la plaque de cuisson (6) qui est la première dans la succession de plaques (6).

26. Appareil (1) selon la revendication 25, **caractérisé en ce qu'**une première partie (20) de l'ensemble moteur (19), comprenant la motorisation, est associée au corps (21) de l'appareil (1) et ne participe pas au mouvement de retournement du plan de chargement (13), alors qu'une seconde partie (22) de l'ensemble moteur (19) fait partie intégrante du mouvement de retournement du plan de chargement (13) et est accouplée à la première partie (20) seulement lorsque le plan de chargement (13) se trouve dans la première configuration de réception.

27. Appareil (1) selon la revendication 26, **caractérisé en ce que** lorsque le plan de chargement se trouve dans la première configuration de réception, l'accouplement entre la première et la seconde partie (20, 22) de l'ensemble moteur (19) est déterminé par le contact entre les roues de friction (23).

28. Appareil (1) selon la revendication 27, **caractérisé en ce que** la première partie (20) est verticalement mobile en opposition à l'action de moyens d'arrêt élastiques (24), ces derniers étant chargés par l'appui de la seconde parties (22) sur la première partie (20) lorsque le plan de chargement (13) se trouve dans la première configuration de réception.

29. Appareil (1) selon n'importe laquelle des revendications précédentes, **caractérisé en ce que** chaque plaque de cuisson (6) permet de charger et de traiter simultanément au moins deux miches minces sans agent levant (2).

30. Appareil (1) selon la revendication 29, **caractérisé en ce que** chaque plaque de cuisson (6) permet de charger et de traiter simultanément une pluralité de miches minces (2) sans agent levant.

31. Appareil (1) selon 1a revendication 29 ou 30, **caractérisé en ce que** chaque plaque de cuisson (6) comprend au moins deux éléments d'arrêt (29) avec de correspondantes surfaces d'arrêt (30) positionnées consécutivement entre elles le long de la direction (7) de flux à des distances prédéterminées de l'un des côtés (9, 32) de la plaque de cuisson 6 transversale à la direction (7) du flux.
